# EUROPÄISCHE PATENTSCHRIFT

(11) **EP 1 893 705 B1**
(45) Veröffentlichungstag und Bekanntmachung des Hinweises auf die Patenterteilung: **17.04.2013**
(21) Anmeldenummer: 06763724.9
(22) Anmeldetag: 14.06.2006
(51) Int. Cl.: C09D 175/00

(54) **VERFAHREN ZUR HERSTELLUNG EINES VERBUNDSTOFFES AUS STEINEN UND EINEM KUNSTSTOFF**
METHOD FOR PRODUCING A COMPOSITE MATERIAL FROM STONES AND A PLASTIC MATERIAL
PROCEDE POUR PRODUIRE UN COMPOSITE CONSTITUE DE PIERRES ET D'UNE MATIERE PLASTIQUE

(30) Priorität: 14.06.2005 DE 102005027551
(43) Veröffentlichungstag der Anmeldung: 05.03.2008
(73) Patentinhaber: BASF SE, 67056 Ludwigshafen (DE)
(72) Erfinder: REESE, Hans-Jürgen, 49401 Damme (DE); SCHMIDT, Hans Ulrich, 49090 Osnabrück (DE); LEITNER, Johann, 82140 Olching (DE)
(86) Internationale Anmeldenummer: PCT/EP2006/063230
(87) Internationale Veröffentlichungsnummer: WO 2006/134136

(56) Entgegenhaltungen:
- EP-A- 0 037 442
- EP-A- 1 300 439
- WO-A-99/50369
- WO-A-2004/078861
- FR-A- 2 722 223
- US-A- 4 933 744
- US-A- 5 626 761
- US-B1- 6 228 500

## Beschreibung

Gegenstand der Erfindung ist ein Verfahren zur Herstellung eines Verbundstoffes aus Steinen mit einer Größe von 1 bis 50 cm, insbesondere Schotter, und einem Kunststoff, insbesondere einem kompakten Polyurethan, der insbesondere bei der Befestigung von Ufern oder von zumindest teilweise in bewegten Gewässern befindlichen Bauwerken, wie Stütz- und Konstruktionselementen, eingesetzt werden kann.

Die Befestigung von Ufern, insbesondere von Uferböschungen, ist für die Regulierung von fließenden Gewässern häufig notwendig. Auch beim Neubau und insbesondere bei der Sanierung von Wasserstraßen und Deichen muss zumeist eine Befestigung von Bereichen des Ufers erfolgen.

Bisher wurden für solche Art Sanierungszwecke Verbundkörper aus Schotter und hochwertigem Beton vorgefertigt und am Einsatzort platziert. Bei diesem Verfahren ist jedoch eine Sanierung von beschädigten Bereichen des Ufers an Ort und Stelle nicht möglich. Außerdem haben die Bauteile zumeist ein sehr hohes Gewicht. Ein weiterer Nachteil von Beton ist die fehlende Elastizität. Dies führt dazu, dass der Beton keine Spannungen verkraftet und sich diese Verbunde leicht lösen.

Eine Möglichkeit der Sanierung von beschädigten Bereichen des Ufers an Ort und Stelle besteht in der Verwendung von härtenden Teerformulierungen oder Flüssigbetonen oder Flüssigmörteln, die über den zu verfestigenden Gesteinsschotter der Uferböschungen ausgetragen wurden. Mit diesem Verfahren kann für eine gewisse Zeit eine Verfestigung der Uferböschungen erreicht werden. Es tritt jedoch vor allem der ökologische Nachteil auf, dass im Laufe der Zeit phenolische oder andere umweltschädliche Verbindungen aus dem Teer freigesetzt werden können. Weiterhin entstehen bei diesen Verfahrensweisen im wesentlichen vollständig lückenlose Strukturen. Eventuell im Innern enthaltende Hohlräume im Uferbereich werden dabei ausgefüllt.

Die Verwendung von Polyurethanen zur Herstellung von Formkörpern mit mineralischen Inhaltsstoffen sowie zur Befestigung von Gesteinsschichten, insbesondere im Bergbau, ist ebenfalls bekannt.

So beschreibt DE 35 02 997 ein Verfahren zur Verfestigung von geologischen Formationen im Bergbau durch Polyurethanschaumstoffe. Hierbei werden in die zu verfestigende Formation Bohrlöcher eingebracht, die mit dem Gemisch der flüssigen Komponenten für die Polyurethanreaktion gefüllt und danach verschlossen werden. Das Polyurethan schäumt auf und verteilt sich dadurch in den Ritzen der Gesteinsformation. Durch das nachfolgende Aushärten des Polyurethanschaumes wird die Formation verfestigt. Ein derartiges Verfahren ist jedoch bei der Sanierung von Böschungen, insbesondere Uferböschungen, nicht anwendbar, da eine Verschäumung dort nicht erwünscht ist, da das Eindringen von Wasser in den Schaum mit der Zeit eine Zerstörung des Schaums bewirken würde.

In der DE 102 41 293 wird ein Verfahren zur Befestigung von Ufern beschrieben. Dabei wird ein stark hydrophobes kompaktes Polyurethan auf den Teil des Ufers, der befestigt werden soll, aufgetragen. Dies setzt jedoch eine gleichmäßige Oberfläche des entsprechenden Uferabschnitts voraus.

In einer anderen Ausführungsform dieses Verfahrens werden Formkörper hergestellt, indem Gestein, vorzugsweise Schotter in eine Form eingebracht und darauf das Polyurethansystem, darunter versteht man das flüssige Reaktionsgemisch der Ausgangskomponenten des Polyurethans, aufgebracht wird. Die nach dem Aushärten entstehenden Formkörper können auf der Uferböschung platziert werden.

In beiden Fällen ist jedoch eine gleichmäßige Verteilung des Polyurethans auf dem Gestein kaum zu bewerkstelligen. Beim Ausbringen des Systems auf die Uferböschung kann es außerdem, insbesondere bei einem ungleichmäßigen Untergrund, zu einer ungenügenden Verfestigung der Böschung kommen.

Aufgabe der Erfindung war es, ein einfaches Verfahren zur Befestigung von Ufern zu finden, bei dem eine hohe Festigkeit des Ufers erreicht werden kann und bei dem das befestigte Ufer auch einer hohen mechanischen Belastung standhält.

Die Aufgabe konnte gelöst werden, indem in einem ersten Schritt in einer Mischvorrichtung die flüssigen Ausgangskomponenten eines Kunststoffs mit Steinen mit einer Größe von 1 bis 50 cm vermischt und in einem zweiten Schritt diese Mischung auf den zu befestigenden Uferabschnitt oder an die zumindest teilweise in bewegten Gewässern befindlichen Bauwerke, wie Stütz- und Konstruktionselemente ausgebracht oder in eine Form gegeben wird, wo der Kunststoff aushärtet.

Gegenstand der Erfindung ist demzufolge ein Verfahren zur Herstellung eines Verbundes aus einem Kunststoff und losen Steinen mit einer Größe von 1 bis 50 cm, umfassend die Schritte
a) Mischung der losen Steine mit den flüssigen Ausgangskomponenten des Kunststoffs in einem Mischer
b) Ausbringen dieser Mischung aus dem Mischer,
c) Aushärten des Kunststoffs.

Bei den Kunststoffen kann es sich beispielsweise um Polyurethane, Epoxyharze, ungesättigte Polyesterharze, Acrylate und Methacrylate handeln. Bevorzugt eingesetzt wird Polyurethan.

Bei den losen Steinen handelt es sich bevorzugt um Schotter, besonders bevorzugt um Granitschotter. Die Steine haben eine Größe von 1 bis 50 cm, bevorzugt von 1 bis 20 cm, besonders bevorzugt von 2 bis 15 cm, insbesondere von 2,5 bis 6,5 cm.

Als Mischer für die Vermischung der losen Steine mit den Ausgangskomponenten des Kunststoffs können prinzipiell alle Arten von Mischern eingesetzt werden, mit denen eine weitgehend vollständige Benetzung der Steine mit den flüssigen Ausgangskomponenten des Kunststoffs möglich ist. Als besonders geeignet haben sich Mischer erwiesen, die aus einem offenen Behälter, beispielsweise einer Trommel, die vorzugsweise mit Einbauten versehen ist, bestehen. Zur Vermischung kann entweder die Trommel in Drehung versetzt oder die Einbauten bewegt werden.

Derartige Mischer sind bekannt und werden beispielsweise in der Bauindustrie zur Herstellung von Betonmischungen eingesetzt.

Wenn die Mischung direkt auf die zu befestigende Fläche aufgebracht wird, kann es vorteilhaft sein, den Mischer an einem Fahrzeug, beispielsweise einem Traktor, einem Frontlader oder einem LKW anzubringen. Bei dieser Ausführungsform des erfindungsgemäßen Verfahrens kann die Mischung jeweils zu dem Platz transportiert werden, an dem sie aufgebracht werden soll. Nach dem Entleeren des Mischers kann die Mischung manuell, beispielsweise mittels Harken, verteilt werden.

In einer Ausführungsform des erfindungsgemäßen Verfahrens erfolgt die Mischung der Steine mit den flüssigen Ausgangskomponenten des Kunststoffs kontinuierlich. Dazu werden die Steine und die flüssigen Ausgangskomponenten des Kunststoffs kontinuierlich in den Mischer eingetragen und die benetzten Steine kontinuierlich ausgetragen. Bei dieser Verfahrensweise muss darauf geachtet werden, dass die Einsatzstoffe so lange im Mischer verbleiben, dass eine ausreichende Benetzung der Steine erfolgen kann. Zweckmäßigerweise kann eine solche Mischvorrichtung in einer solchen Geschwindigkeit an den zu befestigenden Abschnitten entlang bewegt werden, dass die mit den flüssigen Ausgangskomponenten des Kunststoffs benetzten Steine in einer solchen Menge aus dem Mischer ausgetragen werden, wie sie zur Befestigung benötigt werden. Es ist auch möglich, die kontinuierliche Mischeinrichtung stationär zu betreiben und die aus dem Mischer ausgetragenen benetzten Steine zu dem gewünschten Ort zu transportieren.

In einer weiteren Ausführungsform der kontinuierlichen Ausgestaltung des erfindungsgemäßen Verfahrens kann der Mischer eine rotierende Trommel sein, in die kontinuierlich Steine eingebracht werden. Diese Trommel ist mit Düsen bestückt, die kontinuierlich die Ausgangskomponenten des Kunststoffes auf den Steinen verteilen. Die Rotation der Trommel sorgt hierbei für eine gute Durchmischung von Kunststoff und Steinen. Durch eine Öffnung am Ende der Trommel werden dann kontinuierlich Kunststoff/ Stein-Verbunde ausgetragen. Die rotierende Trommel kann dabei horizontal, aber auch in verschiedenen Winkeln geneigt sein, um den Austrag zu fördern.

In einer weiteren Ausführungsform des kontinuierlichen Verfahrens werden die Steine kontinuierlich auf einem Förderband, welches durch einen Tunnel gefahren wird, transportiert. Dieser verfügt über Öffnungen, über die kontinuierlich die Ausgangsstoffe des Kunststoffes auf die Steine ausgetragen werden. Am Ende des Förderbandes fallen die Steine dann in eine offene Mischtrommel, die mit einstellbarer Fördergeschwindigkeit den Verbund austrägt.

Die Dicke der Schicht aus dem Verbundstoff liegt vorzugsweise bei mindestens 10 cm, da bei geringeren Dicken die mechanische Stabilität häufig nicht ausreichend ist. Die maximale Dicke ist abhängig von den örtlichen Gegebenheiten und kann beispielsweise bis zu 5 Metern betragen.

Bei der Herstellung von Formkörpern wird die Mischung der losen Steine mit den flüssigen Ausgangskomponenten des Kunststoffs nach dem Vermischen in eine vorzugsweise nach oben offene Form gegeben, wo der Kunststoff aushärtet. Der so entstandene Verbundkörper kann auf das Ufer aufgebracht werden. Die Formkörper haben vorzugsweise eine Größe von 100 + 50 x 100 + 50 x 15 + 10 cm.

Die Zeit für die Mischung sollte mindestens so bemessen sein, dass die Steine möglichst vollständig mit der flüssigen Mischung benetzt sind und höchstens so lange, dass der Kunststoff noch nicht ausgehärtet ist.

Es ist prinzipiell auch möglich, die losen Steine in der gewünschten Dicke auf den zu befestigenden Uferabschnitt aufzubringen und darauf mittels einer geeigneten Vorrichtung, beispielsweise einer Sprühpistole, die flüssigen Ausgangskomponenten des Kunststoffs aufzubringen, wo sie sich verteilen und aushärten. Gegenüber dem erfindungsgemäßen Verfahren hat diese Verfahrensweise jedoch den Nachteil, dass hier die Verteilung des Kunststoffs ungleichmäßiger ist und Fehlstellen, an denen sich kein Kunststoff befindet, nicht ausgeschlossen werden können. Weiterhin kann es beim Vorhandensein von lose haftenden Verunreinigungen, wie Sand oder Erde, zu Problemen bei der Haftung der Steine aneinander und somit bei der Stabilität des Verbundstoffs geben.

Demgegenüber ist es bei dem erfindungsgemäßen Verfahren möglich, auch solche Steine zu verwenden, die an ihrer Oberfläche lose haftende Verunreinigungen aufweisen. Durch die mechanische Beanspruchung beim Mischvorgang werden diese Verunreinigungen von der Oberfläche der Steine entfernt und können somit nicht mehr die Haftung der Steine aneinander beeinträchtigen.

In einer bevorzugten Ausführungsform des erfindungsgemäßen Verfahrens kann auf die Oberfläche des Formkörpers Sand aufgebracht werden. Damit der Sand auf der Oberfläche haftet, sollte das Aufbringen des Sandes vor der vollständigen Aushärtung des Kunststoffs erfolgen.

Es können beliebige Sande eingesetzt werden. Dabei kann es sich um natürlichen Sand oder künstlichen Sand, wie Hüttensand oder Schlackenbrechsand handeln.

In einer bevorzugten Ausführungsform wird Quarzsand eingesetzt.

Die Korngröße des Sandes kann in weiten Grenzen variieren. Bevorzugt liegt die Korngröße im üblichen Bereich zwischen 0,002-2 mm. Bevorzugt eingesetzt werden Feinsand, das heißt solcher mit einer Korngröße zwischen 0,06-0,2 mm, Mittelsand mit einer Korngröße zwischen 0,2-0,6 mm und/oder Grobsand mit einer Korngröße zwischen 0,6-2,0 mm.

Die Menge des Sandes sollte so bemessen sein, dass die Oberfläche der Formkörper im wesentlichen bedeckt ist, es jedoch nicht zu einer Verstopfung der Poren des Formkörpers kommt. Vorzugsweise wird der Sand in einer Menge von 2 bis 4 kg /m² des Formkörpers aufgebracht.

Durch den Sand kommt es zu einer Verstärkung der Kontaktpunkte zwischen den Steinen. Ferner verbessert der Sand den UV-Schutz des Formkörpers.

Die durch den Sand bewirkte raue Oberfläche begünstigt die Ansiedlung von Lebewesen, wie Pflanzen und Moosen auf den ausgebrachten Formkörpern. Dies kann beispielsweise beim Ausbringen der Formkörper in Naturschutzgebieten vorteilhaft sein.

Das Mengenverhältnis von Kunststoff zu Stein wird mindestens so gewählt, dass eine ausreichende Festigkeit des Verbunds gewährleistet ist. Die genauen Mengen hängen beispielsweise auch von der Stärke der Beanspruchung der Formkörper an den jeweiligen Uferabschnitten ab.

Da bei den erfindungsgemäßen Verbunden die Steine im wesentlichen an den Berührungsflächen miteinander verbunden sind, entstehen Lücken, und die Verbunde sind wasserdurchlässig. Dadurch wird die Energie, mit der das Wasser auf den Schotterverbund auftrifft, durch das Ausweichen des Wassers in Hohlräume besser adsorbiert und führt nicht zur Zerstörung des Formkörpers.

Unter Ufer können bei der vorliegenden Erfindung die Ufer von Bächen, Flüssen oder Kanälen verstanden werden. Weiterhin kann es sich um Ufer von Seen, Stauseen oder Küstenabschnitte von Meeren handeln. Dabei kann es sich um flache Ufer, Böschungen, Dämme, Buhnen oder Deiche handeln.

Eine weitere Anwendungsmöglichkeit des erfindungsgemäßen Verfahrens ist der Schutz von Bauwerken, die sich zumindest teilweise in bewegtem Wasser befinden, vor der sogenannten Auskolkung. Darunter versteht man eine örtliche Vertiefung des Grunds der strömenden Gewässer, insbesondere der Flusssohle zumeist bei starker Wasserströmung in Engstrecken, häufig auch an Brückenpfeilern, wo infolge des Staus und des nachfolgenden stärkeren Gefälles durch rotierende Strömung, die sogenannte Wasserwalze, die Fundamente angegriffen werden. Der gleiche Effekt findet sich beispielsweise bei Stütz- oder Brückenpfeilern von See-, Wasser- und/oder Schiffsbrücken, Hafenanlagen, wie schwimmenden, festen Molen, Bootsanlegem, oder Auswasserungsanlagen, bei Kaianlagen, Bootshäusern, Ufermauern, Bohrinseln, Off-Shore-Anlagen, wie Windenergieanlagen, Seezeichen, Leuchttürmen, oder Messplattformen, Wasserkraftwerken, Tunneln oder Pfählungen.

Hierbei lässt sich das erfindungsgemäße Verfahren besonders vorteilhaft anwenden, da andere Ausbringungsarten der flüssigen Aufbaukomponenten des Kunststoffs bei diesem Anwendungsfall nachteilig wären. Wenn man beispielsweise zunächst die Steine einbringen und danach auf diese die flüssigen Aufbaukomponenten des Kunststoffs aufbringen würde, könnte es auf Grund der Wasserbewegung zu keiner gleichmäßigen Verteilung der Aufbaukomponenten auf den Steinen kommen.

Die Geometrie der gegen die Auskolkung angebrachten Verbunde richtet sich nach den jeweiligen Strömungsverhältnissen.

Die Verbundstoffe zur Verhinderung der Auskolkung können dabei, je nach den Strömungsverhältnissen, sowohl direkt an die Bauwerke als auch von diesen entfernt angebracht werden.

Durch das offene Lückensystem der Verbundkörper, das die hydrodynamische Energie aufnehmen kann, somit die Wellen-, Strömungsenergie bricht und infolge dessen zu deutlich geringerer Auskolkung führt, können Schäden an Bauwerken vermieden und die Tragfähigkeit von Stütz- und Konstruktionselementen erhöht werden.

Ein weiterer Vorteil ist die einfache Möglichkeit, Reparaturen an den Verbunden vorzunehmen.

Wie beschrieben, handelt es sich bei den Kunststoffen um solche, die aus flüssigen Ausgangskomponenten hergestellt werden, die zu festen Kunststoffen aushärten. Vorzugsweise sind die Kunststoffe kompakt, das heißt, sie enthalten praktisch keine Poren. Gegenüber zelligen Kunststoffen zeichnen sich kompakte Kunststoffe durch eine größere mechanische Stabilität aus. Blasen innerhalb des Kunststoffs können auftreten und sind zumeist unkritisch. Sie sollten jedoch möglichst minimiert werden.

Außerdem ist es bevorzugt, wenn die Kunststoffe hydrophob sind. Damit wird ein Abbau der Kunststoffe durch das Wasser unterdrückt.

Zu den bevorzugt verwendeten Polyurethanen ist folgendes zu sagen.

Als Aufbaukomponenten der Polyurethane im Sinne der vorliegenden Erfindung werden ganz allgemein Verbindungen mit freien Isocyanatgruppen und Verbindungen mit Gruppen, die mit Isocyanatgruppen reaktiv sind, verstanden. Gruppen, die mit Isocyanatgruppen reaktiv sind, sind zumeist Hydroxylgruppen oder Aminogruppen. Bevorzugt sind Hydroxylgruppen, da die Aminogruppen sehr reaktiv sind und das Reaktionsgemisch daher rasch verarbeitet werden muss. Die durch Umsetzung dieser Aufbaukomponenten gebildeten Produkte werden im folgenden allgemein als Polyurethane bezeichnet.

Bei beiden Verfahrensvarianten ist es nicht erforderlich, dass die Steine trocken vorliegen. Überraschenderweise gelingt es auch bei Vorliegen von nassen Steinen und sogar unter Wasser, eine gute Haftung zwischen dem Polyurethan und den Steinen zu erhalten.

Als Polyurethane können die üblichen und bekannten Verbindungen dieses Typs eingesetzt werden. Die Herstellung dieser Materialien erfolgt durch Umsetzung von Polyisocyanaten mit Verbindungen mit mindestens zwei aktiven Wasserstoffatomen. Als Polyisocyanate können prinzipiell alle bei Raumtemperatur flüssigen Polyisocyanate, Mischungen und Prepolymere mit mindestens zwei isocyanatgruppen eingesetzt werden.

Vorzugsweise kommen aromatische Polyisocyanate zum Einsatz, besonders bevorzugt Isomere des Toluylendiisocyanats (TDI) und des Diphenylmethandiisocyanats (MDI), insbesondere Mischungen aus MDI und Polyphenylenpolymethylenpolyisocyanaten (Roh-MDI). Die Polyisocyanate können auch modifiziert sein, beispielsweise durch den Einbau von Isocyanuratgruppen und insbesondere durch den Einbau von Urethangruppen. Die letztgenannten Verbindungen werden durch Umsetzung von Polyisocyanaten mit einem Unterschuss an mit Verbindungen mit mindestens zwei aktiven Wasserstoffatomen hergestellt und üblicherweise als NCO-Prepolymere bezeichnet. Ihr NCO-Gehalt liegt zumeist im Bereich zwischen 2 und 29 Gew.-%.

Als Verbindungen mit mindestens zwei mit Isocyanatgruppen reaktiven Wasserstoffatomen werden zumeist mehrfunktionelle Alkohole, sogenannte Polyole, oder, weniger bevorzugt, mehrfunktionelle Amine eingesetzt.

In einer bevorzugten Ausführungsform des erfindungsgemäßen Verfahrens werden als kompakte Polyurethane solche mit einer hydrophoben Ausrüstung eingesetzt. Die Hydrophobie kann insbesondere durch Zusatz von hydroxylfunktionellen fettchemischen Komponenten zu mindestens einer der Ausgangskomponenten des Polyurethansystems, bevorzugt zur Polyolkomponente, bewirkt werden.

Es sind eine Reihe von hydroxylfunktionellen fettchemischen Komponenten bekannt, die verwendet werden können. Beispiele sind Rizinusöl, mit Hydroxylgruppen modifizierte Öle wie Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sesamöl, Haselnussöl, Nachtkerzenöl, Wildrosenöl, Hanföl, Distelöl, Walnussöl, mit Hydroxylgruppen modifizierte Fettsäureester auf Basis von Myristoleinsäure, Palmitoleinsäure, Ölsäure, Vaccensäure, Petroselinsäure, Gadoleinsäure, Erucasäure, Nervonsäure, Linolsäure, Linolensäure, Stearidonsäure, Arachidonsäure, Timnodonsäure, Clupanodonsäure, Cervonsäure. Bevorzugt eingesetzt werden hierbei das Rizinusöl und dessen Umsetzungsprodukte mit Alkylenoxiden oder Keton-Formaldehyd-Harzen. Letztgenannte Verbindungen werden beispielsweise von der Bayer AG unter der Bezeichnung Desmophen^{®} 1150 vertrieben.

Eine weitere bevorzugt eingesetzte Gruppe von fettchemischen Polyolen kann durch Ringöffnung epoxidierter Fettsäureester bei gleichzeitiger Umsetzung mit Alkoholen und gegebenenfalls folgenden weiteren Umesterungsreaktionen gewonnen werden. Der Einbau von Hydroxylgruppen in Öle und Fette erfolgt in der Hauptsache durch Epoxydierung der in diesen Produkten enthaltenen olefinischen Doppelbindung gefolgt von der Umsetzung der gebildeten Epoxidgruppen mit einem ein- oder mehrwertigen Alkohol. Dabei wird aus dem Epoxidring eine Hydroxylgruppe oder bei mehrfunktionellen Alkoholen eine Struktur mit einer höheren Anzahl an OH-Gruppen. Da Öle und Fette meist Glyzerinester sind, laufen bei den oben genannten Reaktionen noch parallele Umesterungsreaktionen ab. Die so erhaltenen Verbindungen haben vorzugsweise ein Molekulargewicht im Bereich zwischen 500 und 1500 g/mol. Derartige Produkte werden beispielsweise von der Firma Henkel angeboten.

In einer besonders bevorzugten Ausführungsform des erfindungsgemäßen Verfahrens wird als kompaktes Polyurethan ein solches eingesetzt, das herstellbar ist durch Umsetzung von Polyisocyanaten mit Verbindungen mit mindestens zwei mit Isocyanatgruppen reaktiven Wasserstoffatomen, dadurch gekennzeichnet, dass die Verbindungen mit mindestens zwei reaktiven Wasserstoffatomen mindestens ein fettchemisches Polyol und mindestens ein mit Phenol modifiziertes aromatisches Kohlenwasserstoffharz, insbesondere ein Inden-Cumaron-Harz enthalten. Diese Polyurethane sowie ihre Aufbaukomponenten weisen eine derart hohe Hydrophobie auf, dass sie prinzipiell sogar unter Wasser zu aushärten können.

Als mit Phenol modifizierte aromatisches Kohlenwasserstoffharze mit einer endständigen Phenolgruppe, werden vorzugsweise mit Phenol modifizierte Inden-Cumaron-Harze, besonders bevorzugt technische Gemische von aromatischen Kohlenwasserstoffharzen verwendet, insbesondere solche, die als wesentlichen Bestandteil Verbindungen der allgemeinen Formel (I) 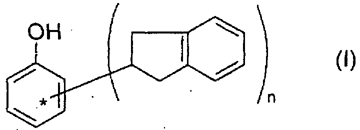 mit n von 2 bis 28 enthalten. Derartige Produkte sind handelsüblich und werden beispielsweise von der Firma Rütgers VFT AG unter dem Handelsnamen NOVARES^{®} angeboten.

Die mit Phenol modifizierten aromatischen Kohlenwasserstoffharze, insbesondere die mit Phenol modifizierten Inden-Cumaron-Harze, weisen zumeist einen OH-Gehalt zwischen 0,5 und 5,0 Gew.-% auf.

Vorzugsweise werden das fettchemische Polyol und das mit Phenol modifizierte aromatische Kohlenwasserstoffharz, insbesondere das Inden-Cumaron-Harz in einem Gewichtsverhältnis von 100 : 1 bis 100 : 50 eingesetzt.

Gemeinsam mit den genannten Verbindungen können weitere Verbindungen mit mindestens zwei aktiven Wasserstoffatomen eingesetzt werden. Auf Grund ihrer hohen Hydrolysebeständigkeit sind Polyetheralkohole bevorzugt. Diese werden nach üblichen und bekannten Verfahren, zumeist durch Anlagerung von Alkylenoxiden an H-funktionelle Startsubstanzen, hergestellt. Die mitverwendeten Polyetheralkohole haben vorzugsweise eine Funktionalität von mindestens 3 und eine Hydroxylzahl von mindestens 400 mgKOH/g, vorzugsweise mindestens 600 mgKOH/g, insbesondere im Bereich von 400 bis 1000 mgKOH/g. Ihre Herstellung erfolgt auf üblichem Wege durch Umsetzung von mindestens dreifunktionellen Startsubstanzen mit Alkylenoxiden. Als Startsubstanzen können vorzugsweise Alkohole mit mindestens drei Hydroxylgruppen im Molekül eingesetzt werden, beispielsweise Glyzerin, Trimethylolpropan, Pentaerythrit, Sorbit, Saccharose. Als Alkylenoxid wird vorzugsweise Propylenoxid eingesetzt.

Der Reaktionsmischung können weitere übliche Bestandteile zugesetzt werden, beispielsweise Katalysatoren und übliche Hilfs- und Zusatzstoffe. Insbesondere sollten der Reaktionsmischung Trockenmittel, beispielsweise Zeolithe, zugesetzt werden, um die Anreicherung von Wasser in den Komponenten und damit ein Aufschäumen der Polyurethane zu vermeiden. Der Zusatz dieser Stoffe erfolgt vorzugsweise zu den Verbindungen mit mindestens zwei mit Isocyanatgruppen reaktiven Wasserstoffatomen. Diese Abmischung wird in der Technik häufig als Polyolkomponente bezeichnet. Zur Verbesserung der Langzeitstabilität der Verbundstoffe ist es weiterhin vorteilhaft, Mittel gegen den Angriff von Kleinlebewesen zuzusetzen. Außerdem ist der Zusatz von UV-Stabilisatoren vorteilhaft, um eine Versprödung der Formkörper zu vermeiden.

Die eingesetzten Polyurethane können prinzipiell ohne die Anwesenheit von Katalysatoren hergestellt werden. Zur Verbesserung der Aushärtung können Katalysatoren mitverwendet werden. Als Katalysatoren sollten vorzugsweise solche ausgewählt werden, die eine möglichst lange Reaktionszeit bewirken. Dadurch ist es möglich, dass die Reaktionsmischung lange flüssig bleibt. Prinzipiell ist es, wie beschrieben, möglich, auch ganz ohne Katalysator zu arbeiten.

Die Kombination der Polyisocyanate mit den Verbindungen mit mindestens zwei mit Isocyanatgruppen reaktiven Wasserstoffatomen sollte in einem solchen Verhältnis erfolgen, dass ein stöchiometrischer Überschuss an Isocyanatgruppen, vorzugsweise von mindestens 5 %, insbesondere im Bereich zwischen 5 und 60 % vorliegt.

Die bevorzugt eingesetzten hydrophoben Polyurethane zeichnen sich durch eine besonders gute Verarbeitbarkeit aus. So zeigen diese Polyurethane eine besonders gute Haftung, insbesondere auf feuchten Substraten wie nassem Gestein, insbesondere Granitschotter. Die Aushärtung der Polyurethane erfolgt trotz der Anwesenheit von Wasser praktisch kompakt. Die eingesetzten kompakten Polyurethane zeigen auch bei dünnen Schichten eine vollständig kompakte Aushärtung.

Damit sind die bevorzugt eingesetzten Polyurethane hervorragend zur Befestigung von Uferböschungen, insbesondere Dämmen und Deichen, geeignet. Der Verbund zwischen Gestein und Polyurethan ist sehr fest. Weiterhin kommt es, insbesondere bei Einsatz sehr hydrophober Polyurethane, zu praktische keinem hydrolytischen Abbau der Polyurethane und somit zu einer sehr langen Haltbarkeit der nach dem erfindungsgemäßen Verfahren befestigten Uferböschungen.

Zur Durchführung des erfindungsgemäßen Verfahrens werden vorzugsweise die Polyisocyanate mit den Verbindungen mit mindestens zwei aktiven Wasserstoffatomen gemischt und diese Mischung mit den Steinen vermischt. Prinzipiell könnten auch beide Ausgangskomponenten des Polyurethans getrennt den Steinen zugegeben und gemeinsam mit diesen vermischt werden. In diesem Falle kann es jedoch zu einer ungleichmäßigen Vermischung und damit zu unzureichenden mechanischen Eigenschaften des Polyurethans kommen.

Die Vermischung der Ausgangskomponenten des Polyurethans kann auf bekannte Weise erfolgen. Im einfachsten Falle können die Komponenten im gewünschten Mengenverhältnis in ein Gefäß, beispielsweise einen Eimer, gegeben, durch einfaches Umrühren gemischt und danach in der Mischeinrichtung mit den Steinen vermischt werden. Es ist auch möglich, die Ausgangskomponenten des Polyurethans in einem in der Polyurethanchemie üblichen Mischorgan, beispielsweise einem Mischkopf, zu mischen und diese Mischung mit den Steinen in Kontakt zu bringen.

Die Erfindung soll an den nachfolgenden Beispielen näher erläutert werden.

### Beispiel 1:

### (Herstellung eines Schotter/Polyurethan-Verbundes durch maschinelle Vermischung)

In ein Mischaggregat (Typ "Fliegel Duplex Mischschaufel", bestehend aus einer großen Mischtrommel mit darin befindlichen Mischarmen) wurden ca. 1200 kg bzw. ca. 0,5 m³ Schotter mit einer mittleren Gesteinsgröße von ca. 2 bis 10 cm eingetragen. Zum Inhalt der Mischtrommel wurden 18 kg eines separat gefertigten flüssigen Polyurethanreaktionsgemisches gegeben, wobei dieses Reaktionsgemisch aus 12 kg eines als Polyolkomponente bezeichneten polyolischen Gemisches und 6 kg eines als Isocyanatkomponente bezeichneten Polyisocyanats gefertigt wurde. Das Gemisch aus Schotter und flüssigen Polyurethanreaktionsgemisch wurde in der Mischtrommel ca. 2 bis 3 min intensiv vermischt, so dass die gesamte Oberfläche der Schottersteine mit dem Polyurethanreaktionsgemisch benetzt war.

Die Mischtrommel wurde mit inhalt so platziert, dass der Inhalt direkt an den zu befestigenden Uferbereich ausgebreitet werden konnte. Mit Harken ließ sich dieses Gemisch aus Schotter und an dessen Oberfläche befindlichen Polyurethan-Reaktionsgemisch so verteilen, dass nach der Aushärtung ein gleichmäßiger ca. 30 cm starker fester, jedoch wasserdurchlässiger Verbund entstand. Der Verbund widerstand den durch die Wasserwellen hervorgerufenen Belastungen und verfestigte damit den Uferbereich.

## Patentansprüche

1. Verfahren zur Herstellung eines Verbundes aus einem Kunststoff und losen Steinen mit einer Größe von 1 bis 50 cm, umfassend die Schritte
a) Mischung der losen Steine mit den flüssigen Ausgangskomponenten des Kunststoffs in einem Mischer
b) Ausbringen dieser Mischung aus dem Mischer,
c) Aushärten des Kunststoffs.

2. Verfahren nach Anspruch 1, **dadurch gekennzeichnet, dass** das Verfahren diskontinuierlich durchgeführt wird.

3. Verfahren nach Anspruch 1, **dadurch gekennzeichnet, dass** das Verfahren kontinuierlich durchgeführt wird.

4. Verfahren nach Anspruch 1, **dadurch gekennzeichnet, dass** die Mischung in Schritt b) auf eine zu sichernde beziehungsweise zu befestigende Fläche aufgebracht wird.

5. Verfahren nach Anspruch 1, **dadurch gekennzeichnet, dass** die Mischung in Schritt b) in eine Form gegeben wird.

6. Verfahren nach Anspruch 1, **dadurch gekennzeichnet, dass** auf der Oberfläche des Kunststoffs Sand aufgebracht ist.

7. Verfahren nach Anspruch 1, **dadurch gekennzeichnet, dass** die Mischung aus Schritt b) auf eine zu sichernde Fläche, wie Ufer, Abhänge, Böschungen, und oder von zumindest teilweise in bewegten Gewässern befindlichen Bauwerken, wie Stütz- und Konstruktionselementen, ausgebracht wird

8. Verfahren nach Anspruch 1, **dadurch gekennzeichnet, dass** die Mischung aus Schritt b) in eine Form ausgebracht, der Kunststoff aushärtet und der so erhaltene Formkörper auf Flächen, wie Ufer, Abhänge, Böschungen, oder an zumindest teilweise in bewegten Gewässern befindliche Bauwerke, wie Stütz- und Konstruktionselemente aufgebracht wird.

9. Verfahren nach Anspruch 1, **dadurch gekennzeichnet, dass** der Kunststoff ausgewählt ist aus der Gruppe, enthaltend Polyurethane, Epoxyharze, ungesättigte Polyesterharze, Acrylate und Methacrylate.

10. Verfahren nach Anspruch 1, **dadurch gekennzeichnet, dass** der Kunststoff ein Polyurethan ist.

11. Verfahren nach Anspruch 10, **dadurch gekennzeichnet, dass** das Polyurethan hydrophob ist.

12. Verfahren nach Anspruch 10, **dadurch gekennzeichnet, dass** das Polyurethan kompakt ist.

13. Verfahren nach Anspruch 10, **dadurch gekennzeichnet, dass** das kompakte Polyurethan herstellbar ist durch Umsetzung von
i) Polyisocyanaten mit
ii) Verbindungen mit mindestens zwei mit isocyanatgruppen reaktiven Wasserstoffatomen und die Verbindungen mit mindestens zwei reaktiven Wasserstoffatomen mindestens ein fettchemisches Polyol enthalten.

14. Verfahren nach Anspruch 13, **dadurch gekennzeichnet, dass** die Komponente ii) mindestens ein mit Phenol modifiziertes aromatisches Kohlenwasserstoffharz enthält.

15. Verfahren nach Anspruch 13, **dadurch gekennzeichnet, dass** die Komponente ii) mindestens ein fettchemisches Polyol und mindestens ein mit Phenol modifiziertes aromatisches Kohlenwasserstoffharz enthält

16. Verfahren nach Anspruch 10, **dadurch gekennzeichnet, dass** das fettchemische Polyol ausgewählt ist aus der Gruppe, enthaltend Rizinusöl, mit Hydroxylgruppen modifizierte Öle wie Traubenkemöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sesamöl, Hanföl, Haselnussöl, Nachtkerzenöl, Wildrosenöl, Hanföl, Distelöl, Walnussöl, mit Hydroxylgruppen modifizierte Fettsäureester auf Basis von Myristoleinsäure, Palmitoleinsäure, Ölsäure, Vaccensäure, Petroselinsäure, Gadoleinsäure, Erucasäure, Nervonsäure, Linolsäure, Linolensäure, Stearidonsäure, Arachidonsäure, Timnodonsäure, Clupanodonsäure, Cervonsäure, sowie Polyole, die durch Ringöffnung epoxidierter Fettsäureester bei gleichzeitiger Umsetzung mit Alkoholen gewonnen werden.

17. Verfahren nach Anspruch 13, **dadurch gekennzeichnet, dass** das mit Phenol modifizierte aromatische Kohlenwasserstoffharz ein mit Phenol modifiziertes Inden-Cumaron-Harz ist.

18. Verfahren nach Anspruch 13, **dadurch gekennzeichnet, dass** das mit Phenol modifizierte aromatische Kohlenwasserstoffharz einen OH-Gehalt zwischen 0,5 und 5,0 Gew.-% aufweist.

## Claims

1. A process for the production of a composite of a plastic and loose stones having a size of from 1 to 50 cm, comprising the steps
a) mixing of the loose stones with the liquid starting components of the plastic in a mixer,
b) discharge of this mixture from the mixer,
c) curing of the plastic.

2. The process according to claim 1, which is carried out batchwise.

3. The process according to claim 1, which is carried out continuously.

4. The process according to claim 1, wherein the mixture in step b) is applied to a surface to be secured or to be stabilized.

5. The process according to claim 1, wherein the mixture in step b) is introduced into a mold.

6. The process according to claim 1, wherein sand is applied to the surface of the plastic.

7. The process according to claim 1, wherein the mixture from step b) is discharged onto a surface to be secured, such as banks, hillsides or slopes and/or structures, such as supporting and construction elements, which are present at least partly in moving waters.

8. The process according to claim 1, wherein the mixture from step b) is discharged into a mold, the plastic is cured and the molding obtained in this way is applied to surfaces, such as banks, hillsides or slopes, or structures, such as supporting and construction elements, which are present at least partly in moving waters.

9. The process according to claim 1, wherein the plastic is selected from the group consisting of polyurethanes, epoxy resins, unsaturated polyester resins, acrylates and methacrylates.

10. The process according to claim 1, wherein the plastic is a polyurethane.

11. The process according to claim 10, wherein the polyurethane is hydrophobic.

12. The process according to claim 10, wherein the polyurethane is compact.

13. The process according to claim 10, wherein the compact polyurethane can be prepared by reacting
i) polyisocyanates with
ii) compounds having at least two hydrogen atoms reactive with isocyanate groups, and the compounds having at least two reactive hydrogen atoms comprise at least one polyol customary in fat chemistry.

14. The process according to claim 13, wherein the component ii) comprises at least one aromatic hydrocarbon resin modified with phenol.

15. The process according to claim 13, wherein the component ii) comprises at least one polyol customary in fat chemistry and at least one aromatic hydrocarbon resin modified with phenol.

16. The process according to claim 10, wherein the polyol customary in fat chemistry is selected from the group consisting of castor oil, oils modified with hydroxyl groups, such as grape-seed oil, black cumin oil, pumpkin seed oil, borage seed oil, soybean oil, wheat germ oil, rapeseed oil, sunflower oil, peanut oil, apricot kernel oil, pistachio kernel oil, almond oil, olive oil, macadamia nut oil, avocado oil, sea buckthorne oil, sesame oil, hemp oil, hazelnut oil, evening primrose oil, wild rose oil, thistle oil, walnut oil, fatty esters modified with hydroxyl groups and based on myristoleic acid, palmitoleic acid, vaccenic acid, petroselenic acid, gadoleic acid, erucic acid, nervonic acid, linoleic acid, linolenic acid, stearidonic acid, arachidonic acid, timnodonic acid, clupanodonic acid or cervonic acid, and polyols which are obtained by ring opening of epoxidized fatty esters with simultaneous reaction with alcohols.

17. The process according to claim 13, wherein the aromatic hydrocarbon resin modified with phenol is a phenol-modified indene-coumarone resin.

18. The process according to claim 13, wherein the aromatic hydrocarbon resin modified with phenol has an OH content of from 0.5 to 5.0% by weight.

## Revendications

1. Procédé de fabrication d'un composite constitué d'un plastique et de pierres en vrac d'une taille de 1 à 50 cm, comprenant les étapes suivantes :
a) le mélange des pierres en vrac avec les composants initiaux liquides du plastique dans un mélangeur,
b) le déchargement de ce mélange du mélangeur,
c) le durcissement du plastique.

2. Procédé selon la revendication 1, **caractérisé en ce que** le procédé est réalisé de manière discontinue.

3. Procédé selon la revendication 1, **caractérisé en ce que** le procédé est réalisé de manière continue.

4. Procédé selon la revendication 1, **caractérisé en ce que** le mélange est appliqué à l'étape b) sur une surface à sécuriser ou à consolider.

5. Procédé selon la revendication 1, **caractérisé en ce que** le mélange est introduit dans un moule à l'étape b).

6. Procédé selon la revendication 1, **caractérisé en ce que** du sable est appliqué sur la surface du plastique.

7. Procédé selon la revendication 1, **caractérisé en ce que** le mélange de l'étape b) est appliqué sur une surface à sécuriser, telle que des rives, des pentes, des talus, et/ou de bâtiments se trouvant au moins partiellement dans des eaux agitées, tels que des éléments de support et de construction.

8. Procédé selon la revendication 1, **caractérisé en ce que** le mélange de l'étape b) est introduit dans un moule, le plastique est durci et le corps moulé ainsi obtenu est appliqué sur des surfaces, telles que des rives, des pentes, des talus, et/ou sur des bâtiments se trouvant au moins partiellement dans des eaux agitées, tels que des éléments de support et de construction.

9. Procédé selon la revendication 1, **caractérisé en ce que** le plastique est choisi dans le groupe contenant les polyuréthanes, les résines époxy, les résines de polyester insaturées, les acrylates et les méthacrylates.

10. Procédé selon la revendication 1, **caractérisé en ce que** le plastique est un polyuréthane.

11. Procédé selon la revendication 10, **caractérisé en ce que** le polyuréthane est hydrophobe.

12. Procédé selon la revendication 10, **caractérisé en ce que** le polyuréthane est compact.

13. Procédé selon la revendication 10, **caractérisé en ce que** le polyuréthane compact peut être fabriqué par mise en réaction de
i) des polyisocyanates avec
ii) des composés contenant au moins deux atomes d'hydrogène réactifs avec les groupes isocyanate, et les composés contenant au moins deux atomes d'hydrogène réactifs contiennent au moins un polyol chimiquement gras.

14. Procédé selon la revendication 13, **caractérisé en ce que** le composant ii) contient au moins une résine hydrocarbonée aromatique modifiée avec du phénol.

15. Procédé selon la revendication 13, **caractérisé en ce que** le composant ii) contient un polyol chimiquement gras et au moins une résine hydrocarbonée aromatique modifiée avec du phénol.

16. Procédé selon la revendication 10, **caractérisé en ce que** le polyol chimiquement gras est choisi dans le groupe contenant l'huile de ricin, les huiles modifiées avec des groupes hydroxyle telles que l'huile de pépins de raisin, l'huile de cumin noir, l'huile de graines de potiron, l'huile de graines de bourrache, l'huile de soja, l'huile de germe de blé, l'huile de colza, l'huile de tournesol, l'huile d'arachide, l'huile de noyau d'abricot, l'huile de pistache, l'huile d'amande, l'huile d'olive, l'huile de noix de macadamia, l'huile d'avocat, l'huile d'argousier, l'huile de sésame, l'huile de chanvre, l'huile de noisette, l'huile d'onagre, l'huile de rose sauvage, l'huile de chardon, l'huile de noix, les esters d'acides gras modifiés avec des groupes hydroxyle à base d'acide myristoléique, d'acide palmitoléique, d'acide oléique, d'acide vaccénique, d'acide pétrosélinique, d'acide gadoléique, d'acide érucique, d'acide nervonique, d'acide linoléique, d'acide linolénique, d'acide stéaridonique, d'acide arachidonique, d'acide timnodonique, d'acide clupanodonique, d'acide cervonique, ainsi que les polyols qui sont obtenus par ouverture de cycle d'esters d'acides gras époxydés avec réaction simultanée avec des alcools.

17. Procédé selon la revendication 13, **caractérisé en ce que** la résine hydrocarbonée aromatique modifiée avec du phénol est une résine d'indène-coumarone modifiée avec du phénol.

18. Procédé selon la revendication 13, **caractérisé en ce que** la résine hydrocarbonée aromatique modifiée avec du phénol présente une teneur en OH comprise entre 0,5 et 5,0 % en poids.
